# EUROPÄISCHE PATENTANMELDUNG

(11) **EP 3 795 939 A1**
(43) Veröffentlichungstag der Anmeldung: **24.03.2021**
(21) Anmeldenummer: 19199032.4
(22) Anmeldetag: 23.09.2019
(51) Int. Cl.: G01B 3/20, G01B 5/08, G01B 3/00, G01B 5/00

(54) **MESSVORRICHTUNG ZUM MESSEN EINES DURCHMESSERS EINES SEILFÖRMIGEN MESSGUTS**

(71) Anmelder: Teufelberger Fiber Rope GmbH, 4600 Wels (AT)
(72) Erfinder: TRAXL, Robert, 4802 Ebensee (AT); KAISER, Gunter, 4600 Thalheim/Wels (AT); RÜHRNÖßL, Erich, 4053 Haid (AT); ERNST, Björn, 4810 Gmunden (AT)
(74) Vertreter: Gruber, Philipp

(57) **Zusammenfassung**

Die Erfindung betrifft eine Messvorrichtung (1) zum Messen eines Durchmessers eines seilförmigen Messguts (2), umfassend zwei zueinander parallele Messflächen (3, 4), ein Anpressmittel (5), welches dazu ausgebildet ist, die Messflächen (3, 4) bei einem Messvorgang mit einer vorbestimmten Messkraft auf das zwischen den Messflächen (3, 4) befindliche Messgut (2) anzupressen, und eine Messeinheit (6), die dazu ausgebildet ist, einen Abstand der Messflächen (3, 4) zu messen, wobei die Messvorrichtung (1) eine Führungseinrichtung (7) umfasst, welche für den Messvorgang an das Messgut (2) angelegt werden kann, wobei die Führungseinrichtung (7) in Bezug auf die Messflächen (3, 4) derart angeordnet ist, dass das Messgut (2) bei dem Messvorgang eine vordefinierte Position gegenüber den Messflächen (3, 4) einnimmt.

## Beschreibung

Die Erfindung betrifft eine Messvorrichtung zum Messen eines Durchmessers eines seilförmigen Messguts, umfassend zwei zueinander parallele Messflächen, ein Anpressmittel, welches dazu ausgebildet ist, die Messflächen bei einem Messvorgang mit einer vorbestimmten Messkraft auf das zwischen den Messflächen befindliche Messgut anzupressen, und eine Messeinheit, die dazu ausgebildet ist, den Abstand der Messflächen zu messen. In weiteren Aspekten betrifft die Erfindung eine Verwendung der genannten Messvorrichtung und ein Verfahren zum Messen eines Durchmessers eines seilförmigen Messguts mittels der genannten Messvorrichtung.

In zunehmendem Maße werden Faserseile in Anwendungen eingesetzt, die bisher Stahlseilen vorbehalten waren. Dies ist der immer fortschreitenden Entwicklung des Aufbaus der Faserseile bzw. den Eigenschaften der ihnen zugrundeliegenden Materialien zu verdanken, die den Faserseilen günstige Eigenschaften verleihen, die jenen der Stahlseile nahekommen bzw. diese sogar übertreffen. Ein besonders relevantes Anwendungsgebiet für Faserseile ist beispielsweise der Einsatz bei Krananlagen, wobei das Faserseil als lasttragendes Seil eingesetzt wird.

Werden Faserseile mit Mehrlagenwicklungen eingesetzt, ist insbesondere der Seildurchmesser maßgebend für ein geordnetes Wickelbild und somit einen minimalen Verschleiß, beispielsweise in den Aufstiegsbereichen von einer Wickellage in die nächsthöhere Wickellage. Jedoch ist die Durchmessermessung bei Faserseilen wesentlich ungenauer als bei Stahlseilen, was Probleme verursacht, wenn man ein Faserseil statt einem Stahlseil einsetzen will.

Es besteht daher ein Bedarf an Messvorrichtungen und Messverfahren, mittels welchen der Durchmesser von Faserseilen besonders genau und zuverlässig bestimmt werden kann. Aus dem Stand der Technik ist beispielsweise ein Dickenmessgerät mit zwei Messflächen bekannt, wobei eine der Messflächen gegenüber der anderen federgespannt ist, um die Dicke eines Seils zwischen den Messflächen zu messen. Dieses Dickenmessgerät kann beispielsweise bei einem Messverfahren nach der EN892:2016 für dynamische Bergseile eingesetzt werden.

Das genannte Dickenmessgerät hat den Nachteil, dass es oft zu einem Verkanten des Prüfmittels kommt, wodurch ein zu großer Durchmesser ermittelt wird. Dieser Fehler kann während einer einzelnen Messung nicht unmittelbar erkannt werden, sodass Messvorgänge oft wiederholt werden müssen, um genauere Messergebnisse zu erhalten.

Ein weiteres Verfahren zur Messung des Durchmessers von Faserseilen ist die sogenannte Umfangsmessung, von der eine Variante in der FDIS2307:2019, Kapitel 9.4, spezifiziert ist. Hierbei wird ein Messband um das Seil gelegt und das Messergebnis anschließend durch π dividiert, um den Durchmesser zu bestimmen. Dieses Messverfahren liefert jedoch eine große Ungenauigkeit bei der Berechnung des Durchmessers, da sie von einem kreisrunden Querschnitt ausgeht und die bei Faserseilen häufige Ovalität nicht berücksichtigt.

Ein weiteres Verfahren zur Bestimmung des Durchmessers eines Faserseils ist aus der JP 2017/122612 A bekannt. Darin wird ein optisches Messverfahren vorgeschlagen, welches jedoch ständiger Stromversorgung bedarf und aufwändig durchzuführen ist. In diesem Verfahren eingesetzte Messgeräte sind teuer und im Einsatz unhandlich, sodass diese nicht praxistauglich sind.

Bei Stahlseilen werden die Durchmesser häufig mit handbetätigten Messschiebern gemessen. Diese Vorgangsweise ist für Faserseile jedoch ungeeignet, da die Handkraft des Prüfers das Messergebnis beeinflusst und ein Verkanten des Messgeräts - ähnlich wie bei dem oben genannten Dickenmessgerät für Faserseile - häufig vorkommt. Zudem weisen Stahlseile aufgrund ihres Aufbaus in der Regel keinen kreisrunden Querschnitt auf, sondern bilden ein Polygon mit einer eindeutigen Geometrie. Messverfahren für Stahlseile sind daher auf Faserseile nicht unmittelbar übertragbar.

Aus der EP 1 855 079 A2 ist weiters bekannt, ein Messgerät selbst in eine Haltevorrichtung einzubauen, um dessen Lage im Raum vorzugeben. Dadurch kann für Folgemessungen eine eindeutige Referenz geschaffen werden. Dieses Messgerät ist für den Einsatz zur Messung des Durchmessers von Faserseilen jedoch ungeeignet, da das Messgerät nicht unmittelbar am beliebig positionierten Faserseil angelegt werden kann.

Es ist daher eine Aufgabe der Erfindung, eine Messvorrichtung und ein Messverfahren zum Messen eines Durchmessers eines seilförmigen Messguts zu schaffen, welche die Nachteile des Standes der Technik überwinden. Insbesondere sollen die Messvorrichtung und das Messverfahren eine besonders genaue und fehlerunanfällige Messung erlauben.

Diese Aufgabe wird in einem ersten Aspekt der Erfindung durch eine Messvorrichtung zum Messen eines Durchmessers eines seilförmigen Messguts gelöst, umfassend zwei zueinander parallele Messflächen, ein Anpressmittel, welches dazu ausgebildet ist, die Messflächen bei einem Messvorgang mit einer vorbestimmten Messkraft auf das zwischen den Messflächen befindliche Messgut anzupressen, und eine Messeinheit, die dazu ausgebildet ist, den Abstand der Messflächen zu messen, wobei die Messvorrichtung eine Führungseinrichtung umfasst, welche für den Messvorgang an das Messgut angelegt werden kann, und wobei die Führungseinrichtung in Bezug auf die Messflächen derart angeordnet ist, dass das Messgut bei dem Messvorgang eine vordefinierte Position gegenüber den Messflächen einnimmt.

Üblicherweise wird das Messgut bei einem Messvorgang vorgespannt, d.h. das Messgut wird mittels einer Spannvorrichtung, z.B. einer Prüfmaschine, gespannt, sodass das Messgut für den Messvorgang ortsfest bereitsteht. Für den Messvorgang wird die Führungseinrichtung vor dem Anpressen der Messflächen an das vorgespannte Seil angelegt, wonach die Messflächen auf das Messgut pressen. Die erfindungsgemäße Messvorrichtung ermöglicht durch den Einsatz der Führungseinrichtung, dass eine vordefinierte Position der Messflächen zum Messgut sichergestellt ist. Dadurch wird ein Verkanten bzw. ein Ausweichen des Seiles gegen die Messflächen effektiv verhindert.

Bisher konnte einem Verkanten der Messflächen bloß dadurch vorgebeugt werden, dass der Prüfer bei dem Messvorgang besonders aufmerksam war bzw. indem mehrere Messungen an derselben Messstelle des Messguts vorgenommen wurden. Mit der erfindungsgemäßen Lösung werden die Messflächen bereits vor dem Anlegen der Messflächen - und nicht erst während des Anlegevorgangs durch den Prüfer - in eine vordefinierte Position gegenüber dem Messgut gebracht, sodass einem Verkanten der Messflächen am Messgut vorgebeugt wird und damit verbundene Messfehler reduziert werden.

Bevorzugt umfasst die Führungseinrichtung zwei im Wesentlichen ebene Führungsflächen, welche besonders bevorzugt derart angeordnet sind, dass die Messflächen in einem Bereich auf das Messgut pressen, der sich zwischen den Führungsflächen befindet, wodurch ein Verkanten der Messflächen am Messgut noch weiter unterbunden werden kann. Die zwei Führungsflächen ermöglichen, dass das Messgut links und rechts der Messflächen auf den Führungsflächen aufliegen kann. Die beiden Führungsflächen können hierbei auf separaten Bauteilen oder auf einem einzigen, optional unterbrochenen Bauteil ausgebildet sein. Besonders bevorzugt liegen die Führungsflächen innerhalb einer gemeinsamen Ebene.

Vorteilhaft sind in der genannten Ausführungsform die Führungsflächen im Wesentlichen senkrecht zu den Messflächen angeordnet. Auch diese Maßnahme ermöglicht, dass die Messflächen an dem Messgut noch weniger zum Verkanten neigen.

Um für den Einsatz bei Faserseilen für Krananlagen besonders geeignet zu sein, sind die Messflächen bevorzugt im Wesentlichen kreisförmig und weisen einen Durchmesser von 20 bis 150 mm auf. Dadurch haben die Messflächen der Messvorrichtung eine Größe, die im Wesentlichen mindestens dem Seildurchmesser von bei Krananlagen eingesetzten Faserseilen entspricht.

Besonders bevorzugt sind die Messflächen modular auswechselbar ausgebildet, sodass die Größe der Messflächen an das zu messende Messgut anpassbar ist. Dies ist insbesondere dann von Vorteil, wenn Seile mit unterschiedlichen Seildurchmessern gemessen werden sollen. Durch das Auswechseln der Messflächen kann vorgesehen werden, dass nicht für jedes zu messende Messgut ein anderes Messgerät mit unterschiedlich großen Messflächen eingesetzt werden muss.

Das Anpressmittel ist bevorzugt dazu ausgebildet, die Messflächen mit einer Messkraft von maximal 50 N gegen das Messgut zu drücken. Dieser Druck ist in Abhängigkeit vom Seildurchmesser wählbar und ist einerseits gering genug, damit keine Deformation des Messguts erfolgt und andererseits ist dieser Druck jedoch hoch genug, dass die erforderliche Genauigkeit der Messvorrichtung gewährleistet werden kann.

Vorteilhaft ist weiters, wenn die Rauheit der Messflächen Ra ≤ 0,8 beträgt. Grundsätzlich erlauben die Messflächen eine umso genauere Messung, je geringer der Rauigkeitswert Ra ist. Bereits bei dem bevorzugten Wert von Ra ≤ 0,8 wird eine ausreichende Genauigkeit erzielt.

Die Auflösung der Messeinheit beträgt bevorzugt mindestens 0,01 mm, besonders bevorzugt im Wesentlichen 0,001 mm. Dies hat sich für die Anwendungen der Durchmessermessung bei Faserseilen als besonders günstig erwiesen.

Bevorzugt ist die Messvorrichtung als tragbares Handgerät mit zumindest einem Griff ausgebildet. Der Griff ermöglicht eine einfachere Handhabung der Messvorrichtung, sodass die Führungsflächen der Messvorrichtung leichter am Messgut anlegbar sind.

In einer vorteilhaften Ausführungsform ist die Messvorrichtung Teil einer Messanlage, welche weiters eine Spannvorrichtung umfasst, die dazu ausgebildet ist, das Messgut mit einer vorbestimmten Längszugkraft vorzuspannen. Das Spannen dient dem Zweck, dass das Messgut bei der Messung einer einheitlichen Spannung unterliegt, sodass vergleichbare Messergebnisse vorliegen. Außerdem kann die Führungseinrichtung der Messvorrichtung leichter an das durch die Spannvorrichtung vorgespannte Seil angelegt werden.

Bevorzugt ist die Spannvorrichtung dazu ausgebildet, das Messgut mit einer Längszugkraft vorzuspannen, die größer als 0,5 % der Mindestbruchkraft des Messguts ist und bevorzugt im Wesentlichen 0,75 % der Mindestbruchkraft des Messguts entspricht. Diese 0,75 % der Mindestbruchkraft entsprechen im Wesentlichen einer Belastung eines Faserseils für Krananlagen durch einen Leerhaken eines Krans. Die Spanneinrichtung kann daher nicht nur durch eine dedizierte Prüfmaschine verwirklicht werden, sondern auch durch einen Kran, der das Faserseil durch Belastung mit dem Leerhaken spannt.

In einem zweiten Aspekt betrifft die Erfindung die Verwendung der genannten Messvorrichtung zur Messung des Durchmessers eines Seils, bevorzugt eines Faserseils, oder eines Kabels, welches weiters bevorzugt mit einer vorbestimmten Längszugkraft vorgespannt ist.

Hierbei wird bevorzugt, wenn eine Messvorrichtung eingesetzt wird, deren Messflächen im Wesentlichen kreisförmig sind und einen Durchmesser aufweisen, der mindestens dem 1-fachen des Durchmessers oder dem 1,5-fachen des Durchmessers des zu messenden Seils entspricht. Entweder kann hierbei eine Messvorrichtung mit entsprechenden Messflächen aus einer Vielzahl von Messvorrichtungen mit unterschiedlich großen Messflächen ausgewählt werden oder - wenn die Messvorrichtung modular auswechselbare Messflächen hat - können die Messflächen selbst gewählt werden, unabhängig vom Rest der Messvorrichtung.

In einem dritten Aspekt betrifft die Erfindung ein Verfahren zum Messen eines Durchmessers eines seilförmigen Messguts mittels der oben genannten Messvorrichtung, umfassend
- Vorspannen des Messguts mit einer vorbestimmten Längszugkraft;
- Anlegen der Führungseinrichtung am Messgut;
- Anpressen der beiden Messflächen mit der vorbestimmten Messkraft auf das zwischen den Messflächen befindliche Messgut;
- Messen und Ausgeben des Durchmessers des Messguts durch Messen des Abstands der Messflächen.

Dieses Messverfahren zeichnet sich durch eine besonders hohe Messgenauigkeit aus, da durch das Anlegen der Führungseinrichtung am Messgut ein Verkanten der Messflächen am Messgut effektiv unterbunden wird.

Bei dem erfindungsgemäßen Verfahren wird bevorzugt, wenn die Schritte des Anlegens, Anpressens und Messens an zumindest drei unterschiedlichen Messstellen durchgeführt werden, die bevorzugt jeweils 0,5 m voneinander entfernt und bevorzugt mindestens 2 m von einem Seilende oder einer Einspannstelle entfernt sind. Dadurch kann ein Messergebnis gewonnen werden, welches für das gesamte Messgut repräsentativer ist als ein Messergebnis an einer einzigen Messstelle.

Weiters bevorzugt wird, wenn die Messvorrichtung an jeder der Messstellen kontinuierlich, beispielsweise sehr langsam und vorsichtig, um den Seilumfang gedreht wird, um einen minimalen Durchmesser und einen maximalen Durchmesser des Messguts an der jeweiligen Messstelle zu bestimmen.

Mit der erfindungsgemäßen Messvorrichtung können besonders genaue und repräsentative Messergebnisse erzielt werden, wenn die beiden letztgenannten Ausführungsvarianten des Verfahrens kombiniert werden. Hierzu umfasst das Messverfahren den Schritt des Berechnens eines arithmetischen Mittels aus gemessenen Minimal- und Maximalwerten des Durchmessers des Messguts an mindestens drei unterschiedlichen Messstellen. Dieses arithmetische Mittel kann in der Folge als gemessener Durchmesser des Messguts herangezogen werden.

Vorteilhafte und nicht einschränkende Ausführungsformen der Erfindung werden nachfolgend anhand der Zeichnungen näher erläutert.
Figur 1 zeigt die erfindungsgemäße Messvorrichtung in einer Perspektivansicht.
Figur 2 zeigt die Messflächen und Führungsflächen einer beispielhaften Ausführungsform der erfindungsgemäßen Messvorrichtung im Detail.

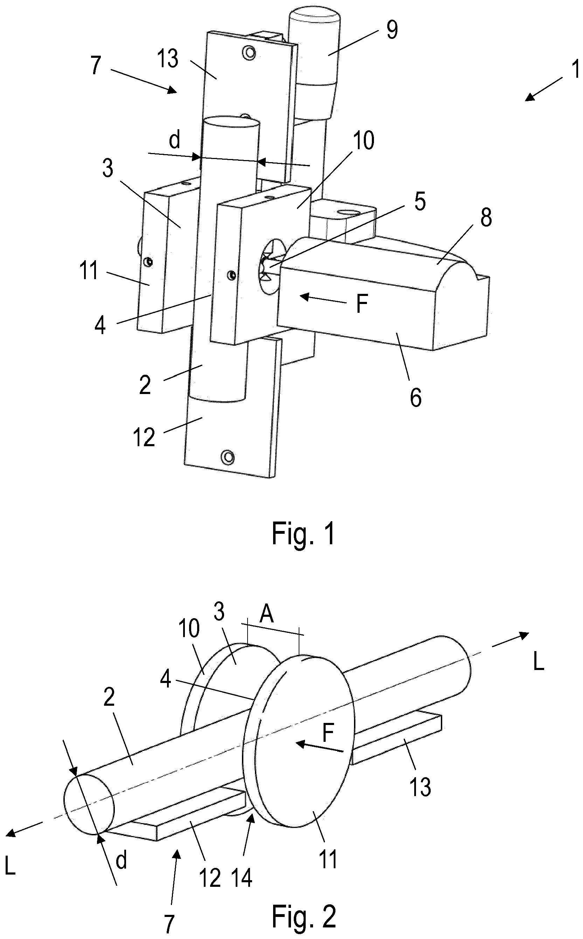

Die Figur 1 zeigt eine Messvorrichtung 1 zum Messen eines Durchmessers d eines seilförmigen Messguts 2. Das Messgut 2 kann im Allgemeinen ein Seil, beispielsweise ein Faserseil oder ein Stahlseil, oder ein Kabel sein.

Insbesondere soll die Messvorrichtung 1 dazu eingesetzt werden, den Durchmesser d eines hochfesten Faser-Hubseils für Krane zu messen. Faserseile bzw. Faser-Hubseile haben im Allgemeinen beispielsweise einen Seilkern, der hochfeste Kunststofffasern oder -litzen umfasst, und einen textilen Mantel. Hochfeste Faserseile bzw. Faser-Hubseile werden, wie dem Fachmann allgemein bekannt, aus hochfesten Kunstfasern gefertigt. Als "hochfest" werden hierin Fasern mit einer Zugfestigkeit von mindestens 14 cN/dtex, bevorzugt einer Zugfestigkeit größer 24 cN/dtex, besonders bevorzugt größer 30 cN/dtex, verstanden. Als hochfeste Faserntypen mit entsprechenden Zugfestigkeiten sind z.B. UHMWPE-Fasern (u.a. Dyneema®), Aramidfasern, LCP-Fasern und PBO-Fasern bekannt.

Für Faserseile sind die derzeit zur Verfügung stehenden Messverfahren nicht ausreichend genau. Die hierin erläuterte Messvorrichtung 1 soll somit insbesondere dazu ausgebildet sein, den Durchmesser von Faserseilen bzw. Faser-Hubseilen zu bestimmen.

Um diesen Zweck zu erfüllen, umfasst die Messvorrichtung 1 zwei zueinander parallele Messflächen 3, 4, ein Anpressmittel 5 und eine Messeinheit 6. Erfindungsgemäß weist die Messvorrichtung weiters eine unten näher beschriebene Führungseinrichtung 7 auf. Wenn die Messvorrichtung 1 als tragbares Handgerät ausgebildet ist, kann diese überdies zumindest einen Griff umfassen, oder wie in der gezeigten Ausführungsform zwei Griffe 8, 9.

Die Messflächen 3, 4 können beispielsweise an Messscheiben 10, 11 ausgebildet sein. Die Messflächen 3, 4 können wie in Figur 1 gezeigt eine rechteckige Grundfläche aufweisen. Figur 2 zeigt eine dazu alternative Ausführungsform mit Messflächen 3, 4, die im Wesentlichen kreisförmig sind. Auch andere Ausgestaltungen der Messflächen 3, 4 sind möglich.

In den Ausführungsformen der Figuren 1 und 2 sind die Messflächen 3, 4 eben. Alternativ könnten die Messflächen 3, 4 auch gekrümmt sein, wenn beispielweise anstatt der Messscheiben 10, 11 Messzylinder eingesetzt werden, deren Zylinderachsen parallel zu einer Längsrichtung des Messguts 2 angeordnet sind.

Die kreisförmigen Messflächen 3, 4 von Figur 2 haben beispielsweise einen Durchmesser, der mindestens dem Durchmesser d des zu messenden Messguts 2 entspricht. Für die Verwendung bei der Messung von Durchmessern d von Faserseilen von Krananlagen können die Messflächen 3, 4 daher beispielsweise einen Durchmesser von 20 bis 150 mm aufweisen. Bei rechteckigen Messflächen 3, 4 wie in Figur 1 gezeigt können diese eine Länge und eine Breite aufweisen, die beispielsweise mindestens dem Durchmesser d des zu messenden Messguts entsprechen, sodass die Messflächen 3, 4 z.B. 20 bis 150 mm lang bzw. breit sind.

Es ist daher ersichtlich, dass die Größen der Messflächen 3, 4 jeweils an das zu messende Messgut 2 angepasst werden sollten. Einerseits ist es zu diesem Zweck möglich, dass mehrere Messvorrichtungen 1 bereitgestellt werden, die jeweils Messflächen 3, 4 mit unterschiedlichen Durchmessern aufweisen. Alternativ können die Messflächen 3, 4 modular auswechselbar ausgebildet sein, z.B. indem die Messscheiben 10, 11 modular auswechselbar ausgebildet sind, sodass die Größe der Messflächen 3, 4 unabhängig vom Rest der Messvorrichtung 1 an das zu messende Messgut 2 anpassbar ist. Beispielsweise kann die Messvorrichtung 1 als Set mit zumindest zwei unterschiedlich großen Paaren von Messflächen 3, 4 bzw. Paaren von Messscheiben 10, 11 bereitgestellt bzw. vertrieben werden. Die Wahl der geeignetsten Messflächen 3, 4 muss nicht durch eine vorangehende Messung bestimmt werden, sondern kann durch Augenmaß bestimmt werden.

Die Messflächen 3, 4 weisen beispielsweise eine Rauheit Ra auf, wobei Ra ≤ 0,8 beträgt. Die Rauheit Ra ist in der ÖNORM EN ISO 4287:2012 definiert. Je geringer die Rauheit Ra der Messflächen 3, 4 ist, umso genauer kann die Messvorrichtung 1 den Durchmesser d des Messguts 2 bestimmen.

Das Anpressmittel 5 ist dazu ausgebildet, die Messflächen 3, 4 bei einem Messvorgang mit einer vorbestimmten Messkraft F an das zwischen den Messflächen 3, 4 befindliche Messgut 2 anzupressen. In den dargestellten Ausführungsformen wird vorgesehen, dass eine der Messflächen 3 starr an der Messvorrichtung 1 ausgebildet ist und die andere Messfläche 4 versetzbar, sodass das Anpressmittel 5 nur auf die versetzbare Messfläche 4 wirkt und diese in Richtung der starren Messfläche 3 drückt. Alternativ könnten beide Messflächen 3, 4 beweglich sein und jeweils mit einem vorbestimmten Anteil der Messkraft F auf das Messgut 2 einwirken.

Das Anpressmittel 5 kann beispielsweise eine Feder aufweisen, um die Messkraft F aufzubringen. Alternativ zur Feder könnte die Messvorrichtung 1 als Anpressmittel 5 auch pneumatische Mittel oder andere Mittel umfassen, welche dazu ausgebildet sind, eine konstante Messkraft auf das Messgut auszuüben. Das Anpressmittel 5 ist üblicherweise dazu ausgebildet, die Messkraft F auf das Messgut 2 zu begrenzen, sodass beispielsweise maximal 50 N auf das Messgut 2 wirken. Dadurch kann die radiale Verformung des Messguts 2 begrenzt werden. Bei einer beispielsweisen Messlänge von 100 mm ergibt sich beispielsweise ein längenbezogener Anpressdruck von 0,5 N/mm, der gering genug ist, damit sich das Messgut 2 nicht verformt.

Um den Durchmesser d des Messguts 2 zu bestimmen, werden die zwei Messflächen 3, 4 entgegen der Messkraft F (die zu diesem Zweck ausgesetzt werden kann) in einen Abstand gebracht, der größer ist als der Durchmesser d des Messguts 2, um das Messgut 2 zwischen den Messflächen 3, 4 zu positionieren. Danach drückt das Anpressmittel 5 die Messflächen 3, 4 mit der Messkraft F auf das Messgut 2, um dessen Durchmesser d zu bestimmen.

Damit es bei diesem Vorgang nicht zum Verkanten der Messflächen 3, 4 am Prüfgut 2 kommt, weist die Messvorrichtung 1 die genannte Führungseinrichtung 7 auf. Die Führungseinrichtung 7 ist in Bezug auf die Messflächen 3, 4 derart angeordnet, dass das Messgut 2 bei dem Messvorgang eine vordefinierte Position gegenüber den Messflächen 3, 4 einnimmt. Beispielsweise bietet die Führungseinrichtung 7 hierzu zumindest eine Auflage, die unbeweglich gegenüber zumindest einer der Messflächen 3, 4 oder gegenüber einer Mittelebene bzw. Nullebene von zwei zueinander beweglichen Messflächen 3, 4 angeordnet ist.

Im Ausführungsbeispiel von Figur 1 umfasst die Führungseinrichtung 7 zwei im Wesentlichen ebene Führungsflächen 12, 13, welche derart angeordnet sind, dass die Messflächen 3, 4 auf das an den Führungsflächen 12, 13 anliegende Messgut 2 pressen. Die Führungsflächen 12, 13 liegen in einer gemeinsamen Ebene und ermöglichen, dass das Messgut 2 beidseitig der Messflächen 3, 4 aufliegt, je nach Lage der Messvorrichtung 1 zum Messgut 2 z.B. links und rechts bzw. oberhalb und unterhalb der Messflächen 3, 4. Die Führungsflächen 12, 13 sind beispielsweise jeweils 25 mm lang.

Figur 2 zeigt im Detail, dass in dieser Ausführungsform zwischen den Führungsflächen 12, 13 ein Bereich 14 vorgesehen ist, in welchem die Messflächen 3, 4 mit der Messkraft F auf das Messgut 2 pressen. In anderen Ausführungsformen kann auch nur eine der seitlichen Führungsflächen 12, 13 vorgesehen werden. Auch könnte kein Bereich 14 zwischen den Führungsflächen 12, 13 freigelassen werden, sodass die Führungseinrichtung 7 durchgängig ausgebildet ist. Dies könnte beispielsweise dann vorgesehen werden, wenn die Führungseinrichtung 7 schmäler als das zu messende Messgut 2 ist oder wenn die Führungseinrichtung 7 derart von den Messflächen 3, 4 beabstandet ist, dass die Messflächen 3, 4 neben der Führungseinrichtung 7 auf das Messgut 2 pressen.

Die Führungsflächen 12, 13 sind im Wesentlichen eben und in einer Ebene senkrecht zu den Messflächen 3, 4 angeordnet. Alternativ könnten die Führungsflächen 12, 13 auch schräg zu den Messflächen angeordnet sein bzw. könnten die Führungsflächen 12, 13 nicht eben, sondern gekrümmt oder gewinkelt sein, um diese an die Form des Messguts 2 anzupassen.

Nachdem die Führungseinrichtung 7 mit den Führungsflächen 12, 13 an das vorgespannte Messgut 2 angelegt wurden, werden die Messflächen 3, 4 mit der Messkraft F auf das Messgut 2 gepresst, wobei hierbei durch die Führungseinrichtung 7 die Gefahr eines Verkantens der Messflächen 3, 4 am Messgut 2 verringert wird.

Sobald die Messflächen 3, 4 mit der Messkraft F auf das Messgut 2 pressen und einen konstanten Abstand A zueinander einnehmen, kann aus dem Abstand A der Messflächen 3, 4 der Durchmesser d des Messguts 2 bestimmt werden. Hierzu umfasst die Messvorrichtung 1 die Messeinheit 6, die dazu ausgebildet ist, den Abstand A der Messflächen 3, 4 zu messen und daraus den Durchmesser d des Messguts 2 zu bestimmen. Die Messeinheit 6 kann beispielsweise analog oder digital ausgeführt sein und in das Anpressmittel 5 integriert oder als gesonderte Einheit ausgebildet sein. In der Folge kann die Messeinheit 6 den gemessenen bzw. bestimmten Wert beispielsweise über eine optische Anzeige anzeigen, über eine Schnittstelle ausgeben oder in einem Speicher hinterlegen.

Insbesondere die Rauigkeit Ra der Messflächen 3, 4 und die Auflösung der Messeinheit 6 bestimmen die erzielbare Messgenauigkeit der Messvorrichtung 1. In Summe hat die Messvorrichtung 1 beispielsweise eine Messgenauigkeit von mindestens 0,1 mm, bevorzugt im Wesentlichen 0,01 mm. Je nach Anwendungsgebiet kann hiervon jedoch abgewichen werden.

Das Messgut 2 wird bei einem Messvorgang bevorzugt vorgespannt, sodass es bei der Messung straff ist. Hierzu kann eine Spanneinrichtung (nicht dargestellt) eingesetzt werden, mittels welcher das Messgut 2 mit einer vorbestimmten Längszugkraft L vorgespannt werden kann. Beispielsweise kann die Spanneinrichtung das Messgut 2 mit einer Längszugkraft L vorspannen, die größer als 0,5 % der Mindestbruchkraft (MBK) des Messguts 2 ist und bevorzugt im Wesentlichen 0,75 % der Mindestbruchkraft des Messguts 2 entspricht.

Als Spanneinrichtung eignet sich beispielsweise eine dedizierte Prüfeinrichtung in einem Labor oder in einer Werkstätte, wobei mittels der Prüfeinrichtung das Messgut 2 mit einer vorbestimmten Längszugkraft L belastet werden kann.

Um den Durchmesser d des Messguts 2 im Einsatz zu bestimmen, kann auch vorgesehen werden, dass das Messgut 2 an einem Ende (bzw. im Allgemeinen an einer Stelle) auf einer erhöhten Position gehalten wird und an einem anderen Ende (bzw. im Allgemeinen an einer anderen Stelle) mit einer Massebelastet wird, sodass die Längszugkraft L unter Schwerkraft durch die Masse erzielt wird. Besonders bevorzugt kann dadurch der Durchmesser d eines Faser-Hubseils gemessen werden, wenn dieses von einem Kran hängt und mit einem Leerhaken als Masse belastet wird. Es hat sich gezeigt, dass das Eigengewicht des Leerhakens bei Kranen im Wesentlichen eine Längskraft von 0,75% der Mindestbruchkraft des Messgutes 2 auf das Messgut 2 ausübt.

Als Verfahren zum Messen eines Durchmessers d des seilförmigen Messguts 2 mit der genannten Messvorrichtung 1 eignet sich insbesondere das im Folgenden beschriebene Verfahren. Eingangs wird das Messgut 2 mittels der Spannvorrichtung mit der vorbestimmten Längszugkraft L vorgespannt. Danach nimmt ein Prüfer die Messvorrichtung 1, wählt hierbei gegebenenfalls die Messflächen 3, 4 in Abhängigkeit vom zu messenden Messgut 2, und legt die Führungseinrichtung 7 am Messgut 2 an, wobei die Messflächen 3, 4 derart voneinander beabstandet sind, dass das Messgut 2 zwischen diesen liegt und die Messflächen 3, 4 das Messgut 2 noch nicht berühren. Dazu können die Messflächen 3, 4 vorab in einen Abstand gebracht werden, der größer ist als der Durchmesser d des Messguts 2.

Im Folgenden werden die beiden Messflächen 3, 4 mit der vorbestimmten Messkraft F durch das Anpressmittel 5 auf das zwischen den Messflächen 3, 4 befindliche Messgut 2 gepresst. Die Messeinheit 6 misst daraufhin den Abstand A der Messflächen 3, 4 und bestimmt daraus den Durchmesser d des Messguts 2 und gibt diesen wie oben erläutert aus.

Mit diesem Messverfahren kann der Durchmesser d des Messguts 2 an einer Messstelle bestimmt werden. Besonders bevorzugt wird jedoch der Durchmesser d des Messguts 2 für eine Messstelle durch eine kontinuierliche Drehung der Messvorrichtung 1 um den Seilumfang gemessen, um z.B. einen minimalen Durchmesser und einen maximalen Durchmesser an einer Messstelle zu bestimmen. Beispielsweise kann dazu die Messvorrichtung sehr langsam und vorsichtig um den Seilumfang gedreht werden, um einen minimalen Durchmesser und einen maximalen Durchmesser des Messguts an der jeweiligen Messstelle zu bestimmen.

Zudem wird der Messvorgang bevorzugt für mehr als eine Messstelle durchgeführt, d.h. die Schritte des Anlegens, Anpressens und Messens werden an zumindest drei unterschiedlichen Messstellen durchgeführt. Die Messstellen liegen beispielsweise jeweils 0,5 m voneinander entfernt und bevorzugt mindestens 2 m von einem Seilende oder einer Einspannstelle entfernt.

Wird der Durchmesser d des Messguts 2 an mehr als einer Messstelle bestimmt und ein minimaler Durchmesser und ein maximaler Durchmesser des Messguts an der jeweiligen Messstelle gemessen, kann das Verfahren bevorzugt den Schritt des Berechnens eines arithmetischen Mittels aus gemessenen Minimal- und Maximalwerten des Durchmessers des Messguts an mindestens drei unterschiedlichen Messstellen umfassen. Dies liefert einen besonders genauen und repräsentativen Durchmesser d des Messguts 2.

## Patentansprüche

1. Messvorrichtung (1) zum Messen eines Durchmessers eines seilförmigen Messguts (2), umfassend zwei zueinander parallele Messflächen (3, 4), ein Anpressmittel (5), welches dazu ausgebildet ist, die Messflächen (3, 4) bei einem Messvorgang mit einer vorbestimmten Messkraft auf das zwischen den Messflächen (3, 4) befindliche Messgut (2) anzupressen, und eine Messeinheit (6), die dazu ausgebildet ist, den Abstand der Messflächen (3, 4) zu messen,
**dadurch gekennzeichnet, dass**
die Messvorrichtung (1) eine Führungseinrichtung (7) umfasst, welche für den Messvorgang an das Messgut (2) angelegt werden kann, wobei die Führungseinrichtung (7) in Bezug auf die Messflächen (3, 4) derart angeordnet ist, dass das Messgut (2) bei dem Messvorgang eine vordefinierte Position gegenüber den Messflächen (3, 4) einnimmt.

2. Messvorrichtung (1) nach Anspruch 1, wobei die Führungseinrichtung (7) zwei im Wesentlichen ebene Führungsflächen (12, 13) umfasst, welche bevorzugt derart angeordnet sind, dass die Messflächen (3, 4) in einem Bereich (14) auf das Messgut (2) pressen, der sich zwischen den Führungsflächen (12, 13) befindet.

3. Messvorrichtung (1) nach Anspruch 1, wobei die Führungseinrichtung (7) eine im Wesentlichen ebene Führungsfläche umfasst, welche derart angeordnet ist, dass die Messflächen (3, 4) auf das an der Führungsfläche anliegende Messgut (2) pressen.

4. Messvorrichtung (1) nach Anspruch 2 oder 3, wobei die Führungsflächen (12, 13) bzw. die Führungsfläche im Wesentlichen senkrecht zu den Messflächen (3, 4) angeordnet sind bzw. ist.

5. Messvorrichtung (1) nach einem der Ansprüche 1 bis 4, wobei die Messflächen (3, 4) im Wesentlichen kreisförmig sind und einen Durchmesser von 20 bis 150 mm aufweisen.

6. Messvorrichtung (1) nach einem der Ansprüche 1 bis 5, wobei die Messflächen (3, 4) modular auswechselbar ausgebildet sind, sodass die Größe der Messflächen (3, 4) an das zu messende Messgut (2) anpassbar ist.

7. Messvorrichtung (1) nach einem der Ansprüche 1 bis 6, wobei das Anpressmittel (5) dazu ausgebildet ist, die Messflächen (3, 4) mit einer Messkraft von maximal 50N gegeneinander zu drücken.

8. Messvorrichtung (1) nach einem der Ansprüche 1 bis 7, wobei die Rauheit der Messflächen Ra ≤ 0,8 beträgt.

9. Messvorrichtung (1) nach einem der Ansprüche 1 bis 8, wobei die Messgenauigkeit der Messvorrichtung (1) mindestens 0,1 mm, bevorzugt im Wesentlichen 0,01 mm, beträgt.

10. Messvorrichtung (1) nach einem der Ansprüche 1 bis 9, wobei die Messvorrichtung (1) als tragbares Handgerät mit zumindest einem Griff (8) ausgebildet ist.

11. Messanlage, umfassend die Messvorrichtung (1) nach einem der Ansprüche 1 bis 10 und eine Spannvorrichtung, die dazu ausgebildet ist, das Messgut (2) mit einer vorbestimmten Längszugkraft vorzuspannen.

12. Messanlage nach Anspruch 11, wobei die Spannvorrichtung dazu ausgebildet ist, das Messgut (2) mit einer Längszugkraft vorzuspannen, die größer als 0,5 % der Mindestbruchkraft des Messguts (2) ist und bevorzugt im Wesentlichen 0,75 % der Mindestbruchkraft des Messguts (2) entspricht.

13. Verwendung der Messvorrichtung (1) nach einem der Ansprüche 1 bis 10 zur Messung des Durchmessers eines Seils, bevorzugt eines Faserseils, besonders bevorzugt eines hochfesten Faserseils, oder eines Kabels, welches weiters bevorzugt mit einer vorbestimmten Längszugkraft vorgespannt ist.

14. Verwendung nach Anspruch 13, wobei die Messflächen (3, 4) im Wesentlichen kreisförmig sind und einen Durchmesser aufweisen, der mindestens dem Durchmesser des zu messenden Seils entspricht.

15. Verfahren zum Messen eines Durchmessers eines seilförmigen Messguts (2) mittels einer Messvorrichtung (1) nach einem der Ansprüche 1 bis 10, umfassend
- Vorspannen des Messguts (2) mit einer vorbestimmten Längszugkraft;
- Anlegen der Führungseinrichtung (7) am Messgut (2);
- Anpressen der beiden Messflächen (3, 4) mit der vorbestimmten Messkraft auf das zwischen den Messflächen (3, 4) befindliche Messgut (2);
- Messen und Ausgeben des Durchmessers des Messguts (2) durch Messen des Abstands der Messflächen (3, 4).

16. Verfahren nach Anspruch 15, wobei die Schritte des Anlegens, Anpressens und Messens an zumindest drei unterschiedlichen Messstellen durchgeführt werden, die bevorzugt jeweils 0,5 m voneinander entfernt und bevorzugt mindestens 2 m von einem Seilende oder einer Einspannstelle entfernt sind, wobei die Messvorrichtung (1) an jeder der unterschiedlichen Messstellen kontinuierlich um den Umfang des Messguts (2) gedreht wird, um einen minimalen Durchmesser und einen maximalen Durchmesser des Messguts (2) an der jeweiligen Messstelle zu bestimmen, und wobei das Verfahren ferner den Schritt des Berechnens eines arithmetischen Mittels aus gemessenen Durchmessern des Messguts (2) an mindestens drei Messstellen umfasst.
